# EUROPÄISCHE PATENTSCHRIFT

(11) **EP 1 370 777 B1**
(45) Veröffentlichungstag und Bekanntmachung des Hinweises auf die Patenterteilung: **01.06.2005**
(21) Anmeldenummer: 02735158.4
(22) Anmeldetag: 21.03.2002
(51) Int. Cl.: F16B 37/06, B23P 19/06

(54) **FUNKTIONSELEMENT, ZUSAMMENBAUTEIL BESTEHEND AUS EINEM BLECHTEIL UND EINEM FUNKTIONSELEMENT SOWIE VERFAHREN ZUR ANBRINGUNG EINES FUNKTIONSELEMENTES AN EIN BLECHTEIL**
FUNCTION ELEMENT, ASSEMBLY PART CONSISTING OF A SHEET METAL PART AND A FUNCTION ELEMENT AND METHOD FOR ATTACHING A FUNCTION ELEMENT TO A SHEET METAL PART
ELEMENT FONCTIONNEL, PIECE D'ASSEMBLAGE COMPRENANT UNE PIECE DE TOLE ET UN ELEMENT FONCTIONNEL, ET PROCEDE PERMETTANT LA FIXATION D'UN ELEMENT FONCTIONNEL A UNE PIECE DE TOLE

(30) Priorität: 23.03.2001 DE 10114200
(43) Veröffentlichungstag der Anmeldung: 17.12.2003
(60) Teilanmeldung: 05007118.2
(73) Patentinhaber: Profil Verbindungstechnik GmbH & Co. KG, 61381 Friedrichsdorf (DE)
(72) Erfinder: BABEJ, Jiri, 35423 Lich (DE)
(74) Vertreter: Manitz, Finsterwald & Partner GbR
(86) Internationale Anmeldenummer: PCT/EP2002/003187
(87) Internationale Veröffentlichungsnummer: WO 2002/077468

(56) Entgegenhaltungen:
- EP-A- 0 539 793
- GB-A- 2 180 905
- US-A- 2 255 964
- US-A- 3 314 138
- US-A- 5 006 025

## Beschreibung

Die vorliegende Erfindung betrifft ein Funktionselement mit einem eine ringförmige Auflagefläche aufweisenden Kopfteil und einem rohrförmigen auf der Seite der Auflagefläche des Kopfteils vorgesehenen, vom Kopfteil weg erstreckenden Nietabschnitt, wobei ein rohrförmiger Führungsabschnitt konzentrisch zum rohrförmigen Nietabschnitt und radial innerhalb diesem angeordnet ist, zwischen dem Führungsabschnitt und dem Nietabschnitt ein Ringspalt vorgesehen ist und der Führungsabschnitt über das freie Ende des Nietabschnitts hinausragt. Weiterhin betrifft die Erfindung ein Zusammenbauteil bestehend aus einem Blechteil und einem solchen Funktionselement nach dem Oberbegriff des Anspruchs 18 sowie ein Verfahren zur Anbringung eines solchen Funktionselementes an ein Blechteil nach dem Oberbegriff des Anspruchs 22 bzw. des Anspruchs 23.

Ein Funktionselement der Eingangs genannten Art ist beispielsweise aus der EP-A-539743 und aus der US-A-5,006,025 bekannt, und zwar sowohl in Form eines Mutterelements als auch in Form eines Bolzenelementes.

Weder das Mutterelement noch das Bolzenelement gemäß US-A-5,006,025 bzw. EP-A-539793 kann selbststanzend in ein Blechteil eingebracht werden, sondern das Blechteil muß vorgelocht werden. Das Mutterelement der US-A-5,006,025 ist zur Anwendung mit einem Kunststoffteil gedacht und wird zu diesem Zweck mit einer vorgefertigten Scheibe benutzt, die auf der dem Kopfteil des Mutterelements abgewandten Seite des Kunststoffteils zur Anlage kommt und an der der umgebördelte Nietabschnitt anliegt. Weiterhin umfaßt die Blechvorbereitung bei der EP-A-539793 die Erzeugung einer axial vorstehenden Ringlippe in das Blechteil, die eine Öffnung begrenzt, in die der Nietabschnitt des Funktionselementes hineingeführt werden muß. Bei dieser Operation steht die Ringlippe auf der Seite des Blechteils vor, von der das Funktionselement eingebracht wird. Die vorstehende Lippe mit der vorgefertigten Öffnung bedeutet in der Praxis, daß das Funktionselement mit hoher Genauigkeit in bezug auf das Blechteil ausgerichtet werden muß, um die ordnungsgemäße Anbringung des Funktionselementes sicherzustellen.

Aufgabe der vorliegenden Erfindung ist es, ein Funktionselement sowie ein Verfahren zur Anbringung des Funktionselementes an ein Blechteil vorzusehen, das eine kostengünstige Anbringung des Funktionselementes an ein Blechteil ermöglicht, ohne besondere Ansprüche an die Ausrichtung des Funktionselementes mit dem Bauteil zu stellen, wobei die Anforderungen bei einer etwaigen, eventuell notwendigen Vorbereitung des Blechteils nicht sehr hoch sind und dennoch eine hochwertige Verbindung zwischen dem Funktionselement und dem Blechteil zustande kommt. Weiterhin soll eine selbststanzende Ausführung des Elementes, falls erwünscht, möglich sein und es soll darüberhinaus eine Verbindung zwischen dem Funktionselement und dem Blechteil zustande kommen, die auch bei beschichteten Blechen eine elektrisch leitende Verbindung ermöglicht.

Zur Lösung dieser Aufgabe wird erfindungsgemäß ein Funktionselement der eingangs genannten Art nach der US-A-5 006 025 vorgesehen, das sich dadurch auszeichnet, daß das freie Ende der Wandung des rohrförmigen Nietabschnitts in einer axialen Schnittebene gesehen sowohl auf der radial äußeren Seite als auch auf der radial inneren Seite gerundet ist und bspw. eine halbkreisförmige oder pfeilspitzartige Form aufweist und daß der Führungsabschnitt als Stanzabschnitt ausgebildet ist und eine ringförmige Schneidkante an seinem der Auflagefläche abgewandten Stirnende aufweist. Weiterhin wird erfindungsgemäß ein Zusammenbauteil nach dem Anspruch 18 sowie ein Verfahren zur Anbringung eines Funktionselements nach den nebengeordneten Ansprüchen 22 und 23 vorgesehen.

Dadurch, daß ein rohrförmiger Führungsabschnitt konzentrisch zum rohrförmigen Nietabschnitt und radial innerhalb diesem angeordnet ist, wobei der Führungsabschnitt über das zweite Ende des Nietabschnittes hinausragt, wird erfindungsgemäß bei der Anwendung des Funktionselement mit einem vorgelochten Blech dafür gesorgt, daß sich der Führungsabschnitt in das Loch des vorgelochten Blechs hineinbewegt und gegebenenfalls unter Ausweitung des Loches für eine Zentrierung des Funktionselementes gegenüber dem vorgefertigten Loch bzw. aufgeweiteten vorbereiteten Loch sorgt. Da der Führungsvorgang vor der anschließenden Aufweitung des Loches durch den Nietabschnitt und der anschließenden Umbördelung des Nietabschnittes stattfindet, wird auch sichergestellt, daß stets eine hochwertige Verbindung zwischen dem Funktionselement und dem Blechteil zustande kommt.

Bei Vorlochung des Blechteils kann diese Vorlochung auch so vorgenommen werden, daß auf der Seite des Bleches, von der das Funktionselement eingeführt wird, keine vorstehende Ringlippe vorliegt, was ebenfalls die Ausrichtung des Funktionselementes mit dem Blechteil erleichtert.

Besonders günstig bei der vorliegenden Erfindung ist es, daß der Führungsabschnitt des Funktionselementes als Stanzabschnitt ausgebildet werden kann, wodurch das Funktionselement selbststanzend in das Blechteil eingebracht werden kann, so daß eine Vorlochung überhaupt nicht notwendig ist und die Forderungen an die Ausrichtung des Funktionselementes mit dem Blechteil noch geringer werden. Durch die selbstanzende Ausbildung des Funktionselementes wird auch eine preisgünstige Herstellung des Zusammenbauteils erreicht, da die Operation der Vorlochung des Blechteils entfällt. Hierdurch wird auch das Verfahren zur Anbringung des Funktionselementes an das Blechteil vereinfacht.

An dieser Stelle soll kurz auf die DE-C-3446978 und die DE-C-3447006 hingewiesen werden. Die DE-C-3446978 beschreibt unter anderem ein Mutterelement, das selbststanzend in ein Blechteil eingebracht wird, während die DE-C-3447006 ein ähnlich konzipiertes Bolzenelement offenbart. Weder das Mutterelement noch das Bolzenelement gemäß den oben genannten deutschen Patenten hat einen Führungsabschnitt zusätzlich zum Nietabschnitt, so daß der Nietabschnitt sowohl die Stanzfunktion als auch die Nietfunktion ausüben muß, was schließlich komplizierter ist und strengere Anforderungen an den Nietabschnitt und an die verwendete Matrize stellt, als bei der vorliegenden Erfindung der Fall ist.

Besonders bevorzugt ist es, wenn das freie Ende der Wandung der ringförmigen Nietabschnitts, in einer axialen Schnittebene gesehen, sowohl auf der radial äußeren Seite als auch auf der radial inneren Seite gerundet ist und beispielsweise eine halbkreisförmige oder pfeilspitzartige Form aufweist.

Wie bereits angedeutet, führt der Führungsabschnitt des Funktionselementes beim Anbringen des Funktionselementes an ein Blechteil zu einer konusförmigen Vertiefung im Blechteil, und zwar bei einem vorgelochten Blechteil bei der Aufweitung des Loches durch den Führungsabschnitt und bei einer selbststanzenden Ausführungsform des Funktionselementes vor dem Heraustrennen eines StanzButzens durch den als Stanzabschnitt ausgebildeten Führungsabschnitt, wobei die konusförmige Vertiefung dann vom Nietabschnitt aufgeweitet wird. Die gerundete Ausbildung der äußeren Wandung des Nietabschnittes im Bereich seines freien Endes ist eine günstige Form für die weitere Aufweitung des Loches und der entsprechenden Verformung der konusförmigen Wandung der Vertiefung. Die gerundete Form auf der inneren Seite des freien Endes des Nietabschnittes hilft dagegen bei der Umbördelung des Nietabschnittes, was in einer entsprechend konkav gewölbten Ringfläche der Matrize erfolgt. Diese Form ermöglicht auch, daß der Ringspalt möglichst klein gehalten werden kann, ohne den Vorgang der Umbördelung des Nietabschnitts zu beeinträchtigen. Dadurch, daß der Ringspalt möglichst klein gehalten werden kann und sogar 0 mm betragen kann (was bedeutet, daß die innere Wandung des Nietabschnittes an dem äußeren Umfang des Führungsabschnittes anliegt), kann der Durchmesser des Funktionselementes als Ganzes möglichst klein gehalten werden, wodurch Material gespart und Kosten gesenkt werden können.

Der Ringspalt weist vorzugsweise eine radiale Abmessung im Bereich zwischen 0 mm und etwa 3 mm.

Der Ringspalt geht vorzugsweise in einem axialen Abstand vor der ringförmigen Anlagefläche auf der Nietabschnittsseite der ringförmigen Auflagefläche zu Ende. Diese Ausbildung führt zu einer stabilen Anbindung des Nietabschnittes an dem Kopfteil des Elementes und begünstigt eine feste Anbringung des Funktionselementes am Blechteil.

Wenn der Führungsabschnitt als Stanzabschnitt ausgebildet ist, weist er vorzugsweise eine ringförmige Schneidkante an seinem der Anlagefläche abgewandten Stirnende auf und diese Schneidkante wirkt mit einer entsprechend geformten Schneidkante einer mittleren Bohrung einer Matrize zusammen, um einen sauberen Stanzbutzen aus dem Blechteil bei der Anbringung des Funktionselementes am Blechteil herauszustanzen.

Besonders bevorzugt ist es, wenn Verdrehsicherungsmerkmale im Bereich der ringförmigen Auflagefläche und/oder am Nietabschnitt und/oder an der Mantelfläche des Kopfteils benachbart zur Auflagefläche angeordnet sind. Wenn die Verdrehsicherungsmerkmale im Bereich der Mantelfläche des Kopfteils vorgesehen sind, so können diese durch eine polygonale oder genutete Form der Mantelfläche erzeugt werden. Die Verdrehsicherungsmerkmale im Bereich der ringförmigen Auflagefläche und/ oder am Nietabschnitt und gegebenenfalls an der Mantelfläche können durch Nasen oder durch rillenförmige Vertiefungen gebildet sein.

Wenn Verdrehsicherungsnasen vorgesehen sind, können diese erhaben an der Auflagefläche und am Nietabschnitt im Bereich des Überganges von der Auflagefläche in den Nietabschnitt vorliegen.

Das Funktionselement kann als hohles Element vorliegen, beispielsweise mit einer zylindrischen Aufnahme für eine drehbar gelagerte Welle oder für eine Gewinde schneidende oder Gewinde formende Schraube oder als Rastaufnahme für den Stift eines Clips oder anderen Gegenstandes.

Darüberhinaus kann das Funktionselement als Mutterelement ausgebildet sein, d.h. das Funktionselement weist einen Gewindezylinder auf, der entweder im Kopfteil oder im Führungsabschnitt oder zumindest teilweise im Kopfteil und im Führungsabschnitt vorgesehen sein kann. Das Funktionselement kann aber darüberhinaus auf der Außenseite des Führungsabschnittes eine zylindrischen Lagerfläche aufweisen und es kann auch als Bolzenelement realisiert werden.

Weitere bevorzugte Ausführungsformen des Funktionselement sowie des Zusammenbauteils ergeben sich aus den beigefügten Unteransprüchen sowie der weiteren Beschreibung von Ausführungsbeispielen.

Die Erfindung wird nachfolgend näher erläutert anhand von Ausführungsbeispielen unter Bezugnahme auf der Zeichnungen, welche zeigen:
- Fig. 1: eine Seitenansicht eines erfindungsgemäßen Funktionselementes in Form eines Hohlkörperelementes,
- Fig. 2: eine Draufsicht auf das obere Stirnende des Funktionselementes der Fig. 1,
- Fig. 3: ein perspektivische Darstellung des Funktionselementes der Figuren 1 und 2,
- Fig. 4: eine teilweise in Längsrichtung geschnittene Darstellung des Funktionselementes der Figuren 1 bis 3 im Ausgangsstadium der Anbringung des Funktionselementes an ein Blechteil unter Anwendung einer Matrize,
- Fig. 5: eine Darstellung ähnlich der Fig. 4, jedoch zu einer späteren Phase der Anbringung des Funktionselementes am Blechteil,
- Fig. 6: eine Darstellung ähnlich der Fig. 5, jedoch in einem noch späteren Stadium der Anbringung des Funktionselementes an ein Blechteil,
- Fig. 7: eine Darstellung ähnlich der Fig. 6 nach Fertigstellung der Anbringung des Funktionselementes am Blechteil und
- Fig. 8: das Zusammenbauteil der Fig. 7 nach der Entfernung aus dem Werkzeug zur Herstellung des Zusammenbauteils.

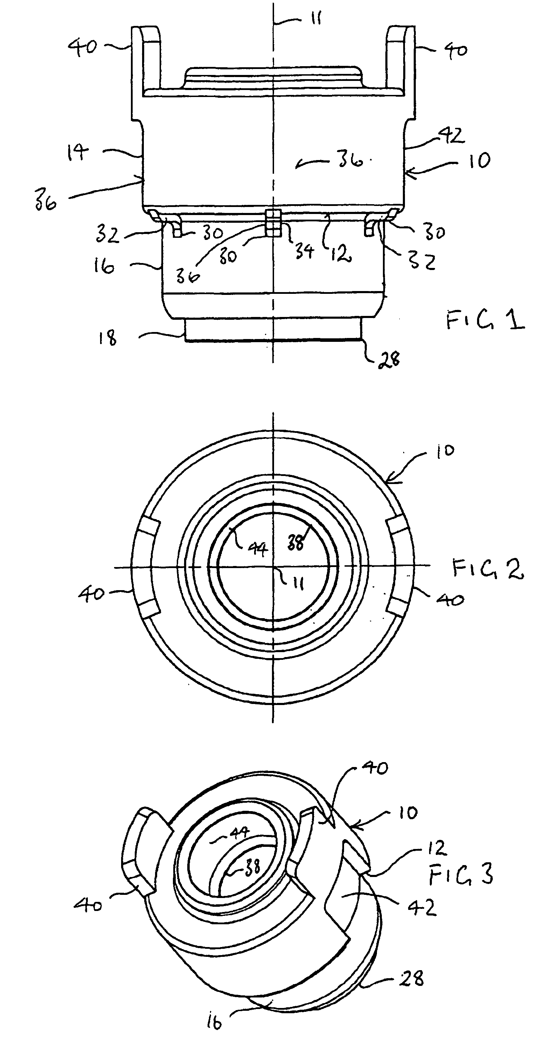

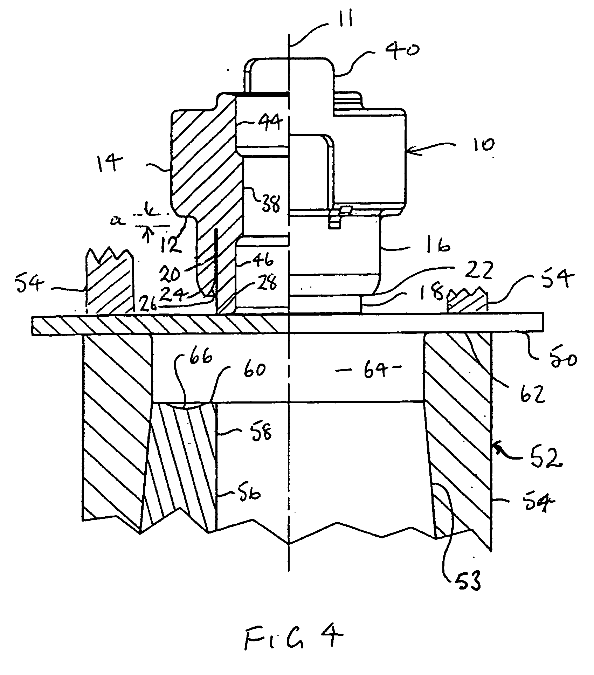

Bezugnehmend auf die Figuren 1 bis 4 ist das dort gezeigte Funktionselement 10 mit einem eine ringförmige Auflagefläche 12 aufweisenden Kopfteil 14 und einem rohrförmigen auf der Seite der Auflagefläche 12 des Kopfteils 14 vorgesehenen vom Kopfteil 14 weg erstreckenden Nietabschnitt 16 versehen. Das Funktionselement weist eine mittlere Längsachse 11 auf.

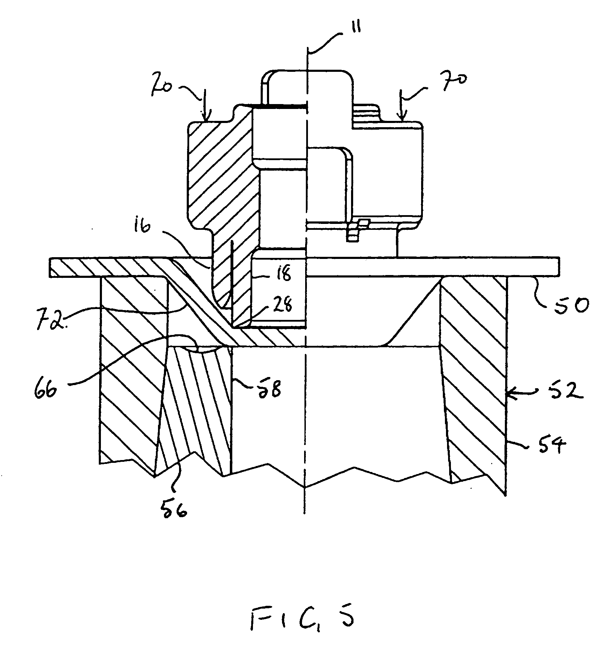

Ein rohrförmiger Führungsabschnitt 18 ist konzentrisch zum rohrförmigen Nietabschnitt 16 und radial innerhalb diesem angeordnet, wobei zwischen dem Führungsabschnitt 18 und dem Nietabschnitt 16 ein Ringspalt 20 vorgesehen ist, der nur aus Fig. 4 ersichtlich ist.

Wie ebenfalls aus Fig. 4 ersichtlich, ist das freie Ende 22 der Wandung des ringförmigen Nietabschnittes 16 in der axialen Schnittebene der Fig. 4 gesehen sowohl auf der radial äußeren Seite 24 als auch auf der radial inneren Seite 26 gerundet und hat hier eine gerundete pfeilspitzartige Form. Die Spitze der pfeilspitzartigen Form könnte aber ebenfalls gerundet sein, wodurch sich eine halbkreisförmige Form ergeben würde, die aber nicht gezeigt ist.

In der Darstellung der Fig. 4 weist der Ringspalt eine radiale Abmessung von 0 mm auf, d.h. der Nietabschnitt liegt am Führungsabschnitt 18 an, ist aber erst mit dem Führungsabschnitt 18 dort verbunden, wo der Ringspalt 20 in einem kurzem axialen Abstand "a" vor der ringförmigen Auflagefläche 12 zu Ende geht.

Das Funktionselement der Figuren 1 bis 4 wird üblicherweise durch ein Kaltschlagverfahren hergestellt, dessen Grundzüge an sich gut bekannt sind. Zur Herstellung des eng am Führungsabschnitt anliegenden Nietabschnittes kann es notwendig sein, den Nietabschnitt erst mit einem gewissen radialen Abstand vom Führungsabschnitt durch Kaltschlagen herzustellen und anschließend in einer weiteren Phase des Kaltschlagverfahrens den Nietabschnitt an den Führungsabschnitt anzudrücken oder den Führungsabschnitt bis zur Anlage an den Nietabschnitt aufzuweiten oder die Verkleinerung des radialen Abstandes durch eine Kombination der beiden Maßnahmen zu erreichen. Günstig ist es, wenn der Ringspalt 20 einen möglichst geringen radialen Breite aufweist, da dies zu einer kompakten Ausbildung des Funktionselementes führt und Material spart.

Der Führungsabschnitt 18 ist hier als Stanzabschnitt ausgebildet und weist eine ringförmige Schneidkante 28 an seinem der Auflagefläche 12 abgewandten Stirnende, d.h. an seinem freien Ende auf.

Die Figuren 1 bis 4 zeigen weiterhin Verdrehsicherungsmerkmale 30 im Bereich der ringförmigen Auflagefläche 12 und am Nietabschnitt 16 auf, wobei die Verdrehsicherungsmerkmale hier durch Nasen gebildet sind, die erhaben an der Auflagefläche 12 und am Nietabschnitt 16 im Bereich des Überganges von der Auflagefläche in den Nietabschnitt 16 vorliegen. Die hier gezeigten Verdrehsicherungsnasen sind mit Seitenflanken 30 und 32 versehen, die in in Längsrichtung des Elementes sich erstreckenden Ebenen liegen. Die in Fig. 1 und 4 bei 34 und 36 scharfkantig ausgebildeten Verdrehsicherungsnasen können hier stattdessen mit gerundeten Kanten versehen werden. Die Verdrehsicherungsnasen könnten auch durch Vertiefungen in der Auflagefläche bzw. im Nietabschnitt realisiert werden. Auch bestünde die Möglichkeit der Mantelfläche 36 des Kopfteils 14 eine polygonale oder genutete Form zu geben. Das Funktionselement ist hier als Mutterelement realisiert und weist einen Gewindezylinder 38 auf, das koaxial zur Längsachse 11 des Funktionselementes angeordnet ist und in diesem Beispiel teilweise im Führungsabschnitt 18 vorliegt. Eine weitere Besonderheit des Mutterelementes der Figuren 1 bis 4 ist in den zwei Lappen 40 zu sehen, die von der oberen Stirnseite des Elementes 10 hinausragen und dadurch erzeugt werden, daß beim Kaltschlagverfahren Material aus den Bereichen 42 nach oben geschoben wird, so daß an den Stellen 42 entsprechende Vertiefungen entstehen, wobei die Bezeichnung "nach oben" lediglich im Hinblick auf die Darstellung gemäß Fig. 1 zu verstehen ist und wie andere Ortsangaben in dieser Anmeldung nur bezogen auf die Figuren verwendet wird und keine räumliche Beschränkung des Erfindungsgegenstandes darstellt. Die Lappen 40 sorgen dafür, daß ein Kabelschuh auf das Funktionselement mittels einer von oben eingesetzten Schraube befestigt werden kann, ohne daß der Kabelschuh mit der Schraube bei der Anbringung der Schraube gedreht wird, da eine Mitdrehung des Kabelschuhs durch die Lappen 40 verhindert wird. Wie insbesondere aus der Fig. 4 ersichtlich, weist das Funktionselement 10 zylindrische Aussparungen 44 und 46 oberhalb und unterhalb des Gewindezylinders 38 auf, wobei diese Freiräume einen Durchmesser aufweisen, der üblicherweise geringfügig größer bemessen wird als der Außendurchmesser einer Schraube, die in den Gewindezylinder 38 eingeschraubt wird.

Obwohl der Gewindezylinder 38 hier teilweise im Kopfteil 14 und teilweise im Führungsabschnitt 18 des Funktionselementes 10 angeordnet ist, könnte er auch vollständig im Kopfteil oder vollständig im Führungsabschnitt angeordnet werden.

Die Fig. 4 zeigt das Funktionselement 10 in einem ersten Stadium der Anbringung an ein Blechteil 50, wobei in der Darstellung Fig. 4 das Blechteil 50 auf einer Matrize 52 abgestützt wird und gegen die Matrize 52 mittels eines ringförmigen Niederhalters 54 gedrückt wird, wobei der Niederhalter 54 vorzugsweise, aber nicht zwangsläufig vorgesehen sein muß.

Die Darstellung gemäß Fig. 4 geht davon aus, daß die Anbringung des Funktionselement 10 an das Blechteil 50 in einer Presse erfolgt, wobei die Matrize 52 im unteren Werkzeug der Presse angeordnet ist (nicht gezeigt) und das Funktionselement 10 mittels eines ebenfalls nicht gezeigten Setzkopfes auf das Blechteil 50 gedrückt wird, wobei der Setzkopf an einer Zwischenplatte der Presse oder an einem oberen Werkzeug der Presse angebracht sein kann. Solche Setzköpfe und Niederhalter 54 sind im Stand der Technik bestens bekannt und werden hier daher nicht extra beschrieben. Es sollte aber zum Ausdruck gebracht werden, daß auch andere Anordnungen innerhalb einer Presse möglich sind. Beispielsweise kann die Matrize 52 in einer Zwischenplatte der Presse angeordnet sein, wobei der Setzkopf mit oder ohne Niederhalter dann am oberen Werkzeug der Presse angebracht wird. Auch ist es möglich, die Matrize 52 am oberen Werkzeug der Presse vorzusehen und den Setzkopf mit oder ohne Niederhalter dann auf einer Zwischenplatte der Presse oder auf dem unteren Werkzeug der Presse zu montieren, d.h. das Funktionselement 10 in umgekehrter Richtung unterhalb des Blechteils 50 anzubringen.

Auch ist es durchaus möglich, das Funktionselement 10 von einem Roboter an das Blechteil 50 anzubringen, wobei der Roboter oder ein Hilfsroboter dann die Matrize 52 unterhalb des Blechteils hält und für die Anbringung der erforderlichen Presskraft auf das Funktionselement 10 sorgt.

In Fig. 4 ist eine zweiteilige Ausbildung der Matrize 52 gezeigt. Diese besteht aus einem äußeren ringförmigen Matrizenteil 54 und einem inneren, ebenfalls ringförmigen Matrizenteil 56 mit einer mittleren Längsbohrung 58, wobei in diesem Beispiel der innere Matrizenteil 56 eine leicht konusförmig verlaufende äußere Wand aufweist, die mit einer entsprechend geformten konusförmig verlaufenden inneren Wand 53 des äußeren Matrizenteils 54 zusammenarbeitet, so daß das obere Stirnende 60 des inneren Matrizenteils 56 unterhalb der oberen Stirnseite 62 des äußeren Matrizenteils 54 zu liegen kommt und hierdurch eine Vertiefung 64 bildet. Das obere Stirnende 60 des inneren Matrizenteils 56 bildet somit die Bodenfläche der Vertiefung 64 und weist im übrigen eine ringförmige konkav gewölbte Fläche 66 auf. Die mittlere Bohrung 58 des mittleren Matrizenteils 56 weist einen Durchmesser auf, der geringfügig größer ist als der Außendurchmesser des Führungsabschnittes 18. Die Vertiefung 64 weist einen Durchmesser auf, der etwas größer ist als der Außendurchmesser des Kopfteils 14 des Funktionselementes 10 zuzüglich die doppelte Stärke des Blechteils 50.

Sowohl das innere Matrizenteil 56 als auch dessen Bohrung 58, und auch das äußere Matrizenteil 54 und die zwischen den beiden Matrizenteilen definierte Vertiefung 64, sind koaxial zur mittleren Längsachse 11 des Funktionselementes 10 angeordnet. Die Matrize 52 könnte auch einteilig ausgeführt werden.

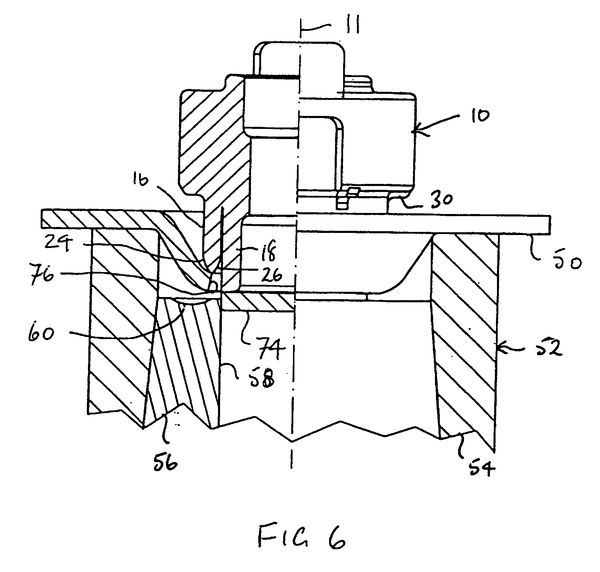

Ausgehend von dem Stadium der Fig. 4 wird nunmehr entsprechend der Fig. 5, durch die Anbringung einer Kraft in Pfeilrichtung 70 auf die obere Stirnseite des Funktionselementes 10 mittels des Setzkopfes z.B. in der Presse oder unter Anwendung eines Roboters und bei gleichzeitiger Abstützung der Matrize, das Funktionselement 10 gegen das Blechteil 50 gedrückt, wobei in Fig. 5 der wahlweise vorgesehene Niederhalter 54 der Darstellung halber weggelassen ist.

Man sieht, daß der Führungsabschnitt das Blechteil gegen das obere Stirnende 60 des inneren Matrizenteils 56 gedrückt und das Blech zu einer konusförmig verlaufenden Vertiefung 72 gezogen hat. In diesem Stadium hat die ringförmige Schneidkante 28 des als Stanzabschnitt 18 ausgebildeten Führungsabschnittes noch nicht angefangen das Blechteil 50 durchzuschneiden und das freie untere Stirnende 22 des Nietabschnitts 16 hat das Blechteil 50 noch nicht berührt.

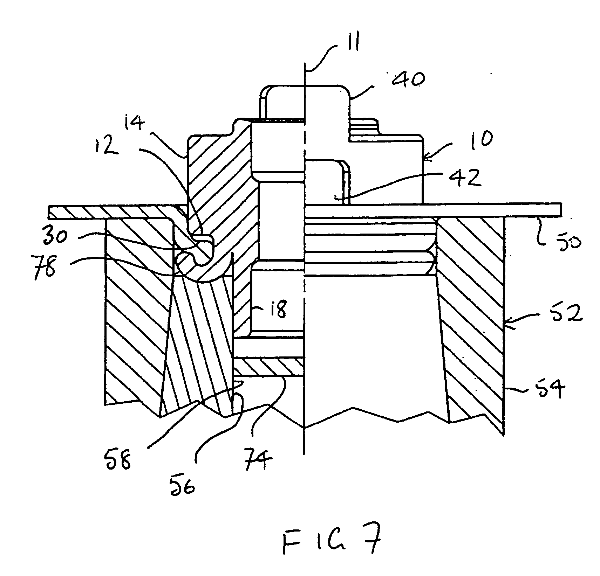

Im weiteren Stadium der Fig. 6 hat der Führungsabschnitt 18 einen Stanzbutzen 74 aus dem Boden der konusförmigen Vertiefung des Blechteils herausgetrennt und diesen teilweise durch die mittlere Bohrung 58 der Matrize gedrückt, wobei diese mittlere Bohrung 58 auch leicht nach unten divergierend ausgebildet sein kann, damit der Stanzbutzen über dieser mittleren Längsbohrung durch Schwerkraft, gegebenenfalls mit pneumatischer Unterstützung, entsorgt werden kann.

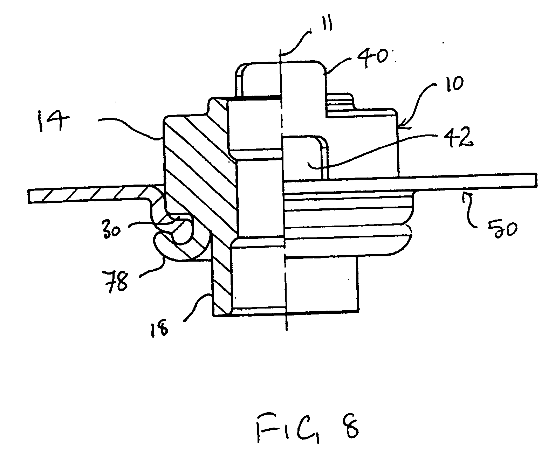

Nach dem Heraustrennen des Stanzbutzens hat auch-die gerundete Außenwand 64 am freien Ende des Nietabschnitts 16 die Wandung der konusförmigen Vertiefung des Blechteils 50 von der mittleren Längsachse 11 weggedrückt, d.h. die Wandung in eine etwas steilere Position gebracht und das Loch 76, das durch Heraustrennen des Stanzbutzens 74 entstanden ist, so weit aufgeweitet, daß das freie Ende des Nietabschnitts 16 nunmehr durch das Loch 76 durchgedrückt werden kann, so daß die innere gekrümmte Wandung 26 des freien Endes des Nietabschnitts in Berührung mit der ringförmigen Vertiefung 66 gelangen kann, wodurch bei einer weiteren nach unten gerichteten Bewegung des Funktionselementes aufgrund des Druckes in Pfeilrichtung 70 der rohrförmige Nietabschnitts 16 zu einem Nietbördel 78 gemäß Fig. 7 umgebördelt wird. Durch diesen Umbördelungsvorgang wird das Blechteil 50 im Bereich der bisherigen konusfärmigen Vertiefung so verformt, daß sie formschlüssig zwischen der ringförmigen Auflagefläche 12 und dem umgebördelten Nietabschnitt geklemmt wird. Gleichzeitig werden die Verdrehsicherungsnasen 30 in das Blechmaterial hineingedrückt, so daß auch eine Verdrehsicherung entsteht. Wenn die Verdrehsicherungsmerkmale durch entsprechende Vertiefungen gebildet sind, so wird das Blechmaterial in solche Vertiefungen hineingedrückt, wodurch ebenfalls eine Verdrehsicherung entsteht.

Das Blechmaterial wird aber gleichzeitig teilweise in die Vertiefungen 42 hineingedrückt, die durch die Ausbildung der Lappen 40 entstanden sind, so daß auch in diesem Bereich eine Verdrehsicherung entsteht. Sollte das Kopfteil 14 des Funktionselementes 10 eine polygonale oder genutete oder gerippte Form aufweisen, so wird auch in diesem Bereich ein entsprechender Formschluß zwischen dem Blechteil und dem Funktionselement erzeugt.

Man sieht aus Fig. 7, daß der Führungsabschnitt 18 während der Anbringung des Funktionselementes 10 immer tiefer in die mittlere Bohrung 58 des inneren Matrizenteils 56 hineinreicht, wodurch eine sichere Führung des Funktionselementes erreicht wird.

Das fertiggestellte Zusammenbauteil, bestehend aus dem Funktionselement 10 und dem Blechteil 50, ist dann in Fig. 8 dargestellt, nach der Entfernung aus dem Anbringungswerkzeug, d. h. aus der Presse oder aus dem Roboter oder andersartig konzipierten Anbringungswerkzeugen.

Man sieht, daß der Führungsabschnitt deutlich über den ungebördelten Nietabschnitt 16 hinausragt, und es ist daher möglich, diesen Führungsabschnitt anschließend als zylindrische Lagefläche zu benutzen. Dies gilt ebenfalls für die Mantelfläche des Körperteils 14, die aus dem Blechteil 50 auf der anderen Seite des Blechteils hinausragt. Es ist im übrigen auch möglich, die Anordnung so zu dimensionieren, daß das Körperteil 14 noch weiter innerhalb der Vertiefung im Blechteil oder sogar vollständig innerhalb dieser Vertiefung untergebracht ist. In dem fertiggestellten Zustand gemäß Fig. 8 kann ein weiteres Bauteil, d.h. ein anderes Blechteil oder ein Kabelschuh, entweder auf der oberen Stirnseite des Funktionselementes oder auf der unteren Stirnseite der Fig. 8 befestigt werden, d.h. die entsprechende Schraube kann von oben kommend oder von unten kommend in den Gewindezylinder eingebracht werden. Es wäre auch möglich, Bauteile sowohl unten als auch oben anzubringen. Weiterhin kann sowohl der Führungsabschnitt 18 als auch der Kopfteil 14 als Abstandselement wirken, so daß das Element in ein aus zwei Blechteilen bestehenden hohles Bauteil eingebracht werden kann. Allerdings wäre es hier voraussichtlich notwendig, das Bauteil 50 vorzulochen, was grundsätzlich auch möglich ist, und zwar auch dann, wenn das Blechteil 50 allein steht, d.h. nicht mit einem weiteren Blechteil zu einem hohlen Bauteil zusammengesetzt ist. Die Lappen 40 sind nur wahlweise vorgesehen, und zwar insbesondere dann, wenn das Element als elektrisches Anschlußelement verwendet werden soll, bspw. als Masseanschlußelement bei einer Fahrzeugkarosserie.

Das Funktionselement 10 gemäß der vorliegenden Erfindung hat den besonderen Vorteil, daß es auch mit Schutzschichten oder Lackschichten versehenen Blechteilen 50 verwendet werden kann und dennoch eine ausgezeichnete elektrische Verbindung erzeugt, und zwar im Bereich des Stanzloches und der Verdrehsicherungsnasen die gerade bei einer scharfkantigen Ausbildung der Verdrehsicherungsnasen die Schutzbeschichtung lokal durchschneiden und für eine metallische Verbindung zum Blechteil 50 sorgen. Darüberhinaus wird die Schutzschicht an Stellen beschädigt, die innerhalb des Formschlusses zwischen dem Blechteil 50 und dem Funktionselement liegen, so daß dort eine Abdichtung vorliegt und Korrosion verhindert wird. Der Formschluß zwischen dem Blechteil und dem Funktionselement ist so intensiv, daß die Verbindung eine abgedichtete Verbindung, darstellt, die, wenn es auf eine besondere Abdichtung ankommt auch durch Anbringung eines Klebstoffs auf das Element oder das Blechteil unterstützt werden kann. Durch die Vertiefung im Blechteil 50 im Bereich des Funktionselementes wird eine ausgezeichnete Verbindung mit dem Blechteil sichergestellt, so daß ein hoher Widerstand gegen Auszugskräfte in beide Richtungen erzeugt wird und außerdem ein hoher Widerstand gegen Scherkräfte und Torsionskräfte vorliegt. Außerdem kann das Element bei wechselnder dynamischen Belastungen verwendet werden und Ermüdungserscheinungen bei dynamischen Belastungen sind nicht zu befürchten.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigkeitswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Funktionselement (10) mit einem eine ringförmige Auflagefläche (12) aufweisenden Kopfteil (14) und einem rohrförmigen auf der Seite der Auflagefläche (12) des Kopfteils (14) vorgesehenen, vom Kopfteil weg erstreckenden Nietabschnitt (16), wobei ein rohrförmiger Führungsabschnitt (18) konzentrisch zum rohrförmigen Nietabschnitt (16) und radial innerhalb diesem angeordnet ist, zwischen dem Führungsabschnitt (18) und dem Nietabschnitt (16) ein Ringspalt (20) vorgesehen ist und der Führungsabschnitt über das freie Ende des Nietabschnittes hinausragt,
**dadurch gekennzeichnet,**
**daß** das freie Ende der Wandung des rohrförmigen Nietabschnitts (16) in einer axialen Schnittebene gesehen sowohl auf der radial äußeren Seite (24) als auch auf der radial inneren Seite (26) gerundet ist und bspw. eine halbkreisförmige oder pfeilspitzartige Form aufweist und daß der Führungsabschnitt (18) als Stanzabschnitt ausgebildet ist und eine ringförmige Schneidkante (28) an seinem der Auflagefläche (12) abgewandten Stirnende aufweist.

2. Funktionselement (10) nach Anspruch 1,
**dadurch gekennzeichnet,**
**daß** der Ringspalt (20) eine radiale Abmessung im Bereich zwischen 0 mm und etwa 3 mm aufweist.

3. Funktionselement (10) nach einem der vorhergehenden Ansprüche,
**dadurch gekennzeichnet,**
**daß** der Ringspalt (20) in einem axialem Abstand (a) vor der ringförmigen Auflagefläche (12) auf der Nietabschnittsseite der ringförmigen Auflagefläche (12) zu Ende geht.

4. Funktionselement (10) nach einem der vorhergehenden Ansprüche,
**dadurch gekennzeichnet,**
**daß** Verdrehsicherungsmerkmale (30) im Bereich der ringförmigen Auflagefläche (12) und/oder am Nietabschnitt (16) und/oder an der Mantelfläche des Kopfteils (14) benachbart zur Auflagefläche (12) angeordnet sind.

5. Funktionselement (10) nach Anspruch 4,
**dadurch gekennzeichnet,**
**daß** die Verdrehsicherungsmerkmale (30) durch Nasen oder durch rillenförmige Vertiefungen gebildet sind.

6. Funktionselement (10) nach Anspruch 5, bei der Verdrehsicherungsnasen (30) vorgesehen sind und diese erhaben an der Auflagefläche (12) und am Nietabschnitt (16) im Bereich des Überganges .. von der Auflagefläche in den Nietabschnitt vorliegen.

7. Funktionselement (10) nach Anspruch 6,
**dadurch gekennzeichnet,**
**daß** sich die Verdrehsicherungsnasen (30) in radialer Richtung an der Auflagefläche (12) und in axialer Richtung am Nietabschnitt (16) erstrecken.

8. Funktionselement (10) nach einem der Ansprüche 4 bis 7,
**dadurch gekennzeichnet,**
**daß** die Verdrehsicherungsnasen eine allgemein gerundete Form aufweisen oder mit Seitenflanken (32) versehen sind, die in in Längsrichtung des Elementes sich erstreckenden Ebenen liegen.

9. Funktionselement (10) nach einem der vorhergehenden Ansprüche,
**dadurch gekennzeichnet,**
**daß** es als hohles Element ausgebildet ist

10. Funktionselement (10) nach einem der vorhergehenden Ansprüche,
**dadurch gekennzeichnet,**
**daß** es als Mutterelement ausgebildet ist.

11. Funktionselement (10) nach Anspruch 10,
**dadurch gekennzeichnet,**
**daß** das Mutterelement einen Gewindezylinder (38) aufweist, der entweder im Kopfteil (14) oder im Führungsabschnitt (18) oder zumindest teilweise im Kopfteil (14) und im Führungsabschnitt (18) vorgesehen ist.

12. Funktionselement (10) nach den Ansprüchen 3 und 11,
**dadurch gekennzeichnet,**
**daß** der Gewindezylinder (38) in axialer Richtung in etwa dort zu Ende geht, wo der ringförmige Spalt (20) vor der ringförmigen Auflagefläche (18) endet.

13. Funktionselement (10) nach einem der vorhergehenden Ansprüche,
**dadurch gekennzeichnet,**
**daß** die Außenseite des Führungsabschnittes (18) als zylindrische Lagerfläche ausgebildet ist

14. Funktionselement (10) nach einem der vorhergehenden Ansprüche,
**dadurch gekennzeichnet,**
**daß** auf der dem Nietabschnitt (16) und dem Führungsabschnitt (18) abgewandten Stirnseite des kopfteils (14) mindestens ein und vorzugsweise zwei in axialer Richtung erstreckende Lappen (40) vorgesehen ist bzw. sind.

15. Funktionselement (10) nach Anspruch 14,
**dadurch gekennzeichnet,**
**daß** der oder jeder Lappen (40) eine Flanke aufweist, die bei Anbringung eines Kabelschuhs eine Drehung desselben um die Längsachse (11) des Funktionselementes (10) verhindert.

16. Funktionselement (10) nach Anspruch 14 oder 15,
**dadurch gekennzeichnet,**
**daß** an der Stelle des oder jedes Lappens (40) die Mantelfläche des Kopfteils (14) eine entsprechende Vertiefung (42) aufweist, die bei der Anbringung des Funktionselements an ein Blechteil (50) als Verdrehsicherung dient.

17. Funktionselement (10) nach einem der vorhergehenden Ansprüche 1 bis 8,
**dadurch gekennzeichnet,**
**daß** zur Ausbildung eines Bolzenelementes ein Schaftteil, gegebenenfalls mit Gewinde, auf der dem Nietabschnitt und dem Führungsabschnitt abgewandten Stirnseite des Kopfteils vorgesehen ist.

18. Zusammenbauteil bestehend aus einem Blechteil und einem Funktionselement (10) nach einem der vorhergehenden Ansprüche, wobei das Blechteil (50) eine in der Mitte ein Loch (76) aufweisende Vertiefung (72) aufweist, in der das Kopfteil des Funktionselementes (10) mindestens teilweise aufgenommen ist, wobei sich der Randbereich des Loches zwischen der ringförmigen Auflagefläche (12) und dem umgebördelten Nietabschnittes (78) formschlüssig gefangen gehalten ist.

19. Zusammenbauteil nach Anspruch 18,
**dadurch gekennzeichnet,**
**daß** ein Formschluß zwischen dem Blechmaterial (50) und den Verdrehsicherungsmerkmalen (30) des Funktionselements (10) vorhanden ist.

20. Zusammenbauteil nach Anspruch 18 oder 19, wobei das Funktionselement (10) entsprechend dem Anspruch 16 ausgebildet ist und das Blechmaterial des Blechteils (50) in der bzw. in jeder Vertiefung (42) hineingeformt ist, die zur Ausbildung des bzw. jedes Lappens (40) entstanden ist.

21. Zusammenbauteil nach einem der Ansprüche 18 bis 20,
**dadurch gekennzeichnet,**
**daß** der Führungsabschnitt (18) in axialer Richtung deutlich weiterragt als der umgebördelte Nietabschnitt (16) bspw. mindestens um 4 mm.

22. Verfahren zur Anbringung eines Funktionselementes (10) nach einem der Ansprüche 1 bis 17 an ein Blechteil (50), wobei das Funktionselement (10) mit einem eine ringförmige Auflagefläche (12) aufweisenden Kopfteil (14) und einem rohrförmigen auf der Seite der Auflagefläche des Kopfteils (14) vorgesehenen, vom Kopfteil (14)weg erstreckenden Nietabschnitt (16) versehen ist, ein rohrförmiger Führungsabschnitt (18) konzentrisch zum rohrförmigen Nietabschnitt (16) und radial innerhalb diesem angeordnet ist, zwischen dem Führungsabschnitt (18) und dem Nietabschnitt (16) ein Ringspalt (20) vorgesehen ist und der Führungsabschnitt (18) über das freie Ende des Nietabschnittes (16) hinausragt,
**dadurch gekennzeichnet,**
**daß** das vorgelochte Blechteil auf einer Matrize (52) mit einer ringförmigen Vertiefung (64) und einer mittleren Bohrung (58), die zumindest im wesentlichen koaxial zur Vertiefung (64) liegt, abgestützt wird, wobei der Durchmesser der mittleren Bohrung (58) nur geringfügig größer ist als der Außendurchmesser des Führungsabschnittes (18) und die Vertiefung (64) einen Durchmesser aufweist, der zumindest im wesentlichen dem Außendurchmesser des Kopfteils (14) des Funktionselementes (10) zuzüglich der doppelten Blechstärke entspricht, daß das freie Stirnende des Führungsabschnittes (18) des Funktionselementes koaxial zur Längsachse der mittleren Bohrung der Matrize und zum Loch des vorgelochten Blechteils auf dieses gedrückt wird und das Blechteil mittels des Stirnendes des Führungsabschnitts zu einer konusförmigen Ausbildung (72) innerhalb der Vertiefung gezogen wird oder im Falle eines konusförmig vorgelochten Blechteils im Bereich des Loches aufgeweitet wird, daß mit dem gerundeten Endbereich (24) des Nietabschnittes (16) die Wandung der konusförmigen Ausbildung (72) von der mittleren Längsachse (11) der Matrize (52) in eine steilere Position weggedrückt wird, während der Führungsabschnitt (18) von der mittleren Bohrung (58) der Matrize (52) geführt wird und daß der Nietabschnitt (16) über eine im Querschnitt konkav gerundete Ringfläche (66) im Bodenbereich der Vertiefung der Matrize nach außen um die Ringwand der konusförmigen Ausbildung (72) radial nach außen umgebördelt wird, um das Blechmaterial zwischen der ringförmigen Auflagefläche (12) und dem umgebördelten Nietabschnitt (78) des Funktionselementes (10) formschlüssig einzuklemmen bei gleichzeitiger Verformung des Blechmaterials zu einem Formschluß mit etwaigen Verdrehsicherungsmerkmalen (30) des Funktionselementes.

23. Verfahren zur Anbringung eines Funktionselementes (10) an ein Blechteil (50), wobei das Funktionselement (10) mit einem eine ringförmige Auflagefläche (12) aufweisenden Kopfteil ( 14) und einem rohrförmigen auf der Seite der Auflagefläche des Kopfteils (14) vorgesehenen, vom Kopfteil (14) weg erstreckenden Nietabschnitt (16) versehen ist, wobei ein rohrförmiger Führungsabschnitt (18) konzentrisch zum rohrförmigen Nietabschnitt (16) und radial innerhalb diesem angeordnet ist, wobei zwischen dem Führungsabschnitt (18) und dem Nietabschnitt (16) ein Ringspalt (20) vorgesehen ist und der Führungsabschnitt (18) über das freie Ende des Nietabschnittes (16) hinausragt, beispielsweise ein Funktionselement, nach einem der Ansprüche 1 bis 17,
**dadurch gekennzeichnet,**
**daß** das Blechteil auf einer Matrize (52) mit einer ringförmigen Vertiefung (64) und einer mittleren Bohrung (58), die zumindest im wesentlichen koaxial zur Vertiefung (64) liegt, abgestützt wird, wobei der Durchmesser der mittleren Bohrung (58) nur geringfügig größer ist als der Außendurchmesser des Führungsabschnittes (18) und die Vertiefung (64) einen Durchmesser aufweist, der zumindest im wesentlichen dem Außendurchmesser des Kopfteils (14) des Funktionselementes (10) zuzüglich der doppelten Blechstärke entspricht, daß das Stirnende des Führungsabschnittes (18) des Funktionselementes koaxial zur Längsachse der mittleren Bohrung der Matrize auf das Blechteil gedrückt wird und das Blechteil mittels des Stirnendes des Führungsabschnitts zu einer konusförmigen Ausbildung (72) innerhalb der Vertiefung gezogen wird, daß mit dem als Stanzabschnitt ausgebildeten Führungsabschnitt (18) ein Butzen (74) aus dem Blechteil (50) herausgeschnitten und über die mittlere Bohrung (58) der Matrize (52) entsorgt wird, daß mit dem gerundeten Endbereich (24) des Nietabschnittes (16) die Wandung der konusförmigen Ausbildung (72) von der mittleren Längsachse (11) der Matrize in eine steilere Position weggedrückt wird, während der Führungsabschnitt (18) von der mittleren Bohrung (58) der Matrize (52) geführt wird und daß der Nietabschnitt (16) über eine im Querschnitt konkav gerundete Ringfläche (66) im Bodenbereich der Vertiefung der Matrize nach außen um die Ringwand der konusförmigen Ausbildung (72) radial nach außen umgebördelt wird, um das Blechmaterial zwischen der ringförmigen Auflagefläche und dem umgebördel-: ten Nietabschnitt (78) des Funktionselementes (10) forinschlüssig einzuklemmen bei gleichzeitiger Verformung des Blechmaterials zu einem Formschluß mit etwaigen Verdrehsicherungsmerkmalen (30) des Funktionselementes.

## Claims

1. Functional element (10) having a head part (14) with a ring-like contact surface (12) and a tubular rivet section (16) provided at the side of the contact surface (12) of the head part (14) and extending away from the head part, wherein
a tubular guide section (18) is arranged concentric to the tubular rivet section (16) and radially within the latter, a ring gap (20) is provided between the guide section (18) and the rivet section (16) and the guide section projects beyond the free end of the rivet section,
**characterized in that**
the free end of the wall of the tubular rivet section (16), when viewed in an axial section plane, is rounded both at the radially outer side (24) and also at the radially inner side (26) and, for example, has a semi-circular shape or a shape resembling an arrow tip; and **in that** the guide section (18) is formed as a piercing section and has a ring-like cutting edge (28) at its end remote from the contact surface (12).

2. Functional element (10) in accordance with claim 1, **characterized in that** the ring gap (20) has a radial dimension in the range between 0 mm and about 3 mm.

3. Functional element (10) in accordance with any one of the preceding claims, **characterized in that** the ring gap (20) finishes at an axial distance (a) in front of the ring-like contact surface (12) at the rivet section side of the ring-like contact surface (12).

4. Functional element (10) in accordance with any one of the preceding claims, **characterized in that** features (30) providing security against rotation are arranged in the region of the ring-like contact surface (12) and/or at the rivet section (16) and/or at the jacket surface of the head part (14) adjacent to the contact surface (12).

5. Functional element (10) in accordance with claim 4, **characterized in that** the features (30) providing security against rotation are formed by noses or by groove-like recesses.

6. Functional element (10) in accordance with claim 5, in which noses (30) providing security against rotation are provided and these are present in raised form at the contact surface (12) and at the rivet section (16) in the region of the transition from the contact surface into the rivet section.

7. Functional element (10) in accordance with claim 6, **characterized in that** the noses (30) providing security against rotation extend in the radial direction at the contact surface (12) and in the axial direction at the rivet section (16).

8. Functional element (10) in accordance with any one of the claims 4 to 7, **characterized in that** the noses providing security against rotation have a generally rounded shape or are provided with side flanks (32) which lie in planes extending in the longitudinal direction of the element.

9. Functional element (10) in accordance with any one of the preceding claims, **characterized in that** it is formed as a hollow element.

10. Functional element (10) in accordance with any one of the preceding claims, **characterized in that** it is formed as a nut element.

11. Functional element (10) in accordance with claim 10, **characterized in that** the nut element has a thread cylinder (38) which is provided either in the head part (14) or in the guide section (18) or at least partly in the head part (14) and in the guide section (18).

12. Functional element (10) in accordance with claim 3 and claim 11, **characterized in that** the thread cylinder (38) terminates in the axial direction approximately at the position where the ring-like gap (20) terminates in front of the ring-like contact surface (18).

13. Functional element (10) in accordance with any one of the preceding claims, **characterized in that** the outer side of the guide section (18) is formed as a cylindrical bearing surface.

14. Functional element (10) in accordance with any one of the preceding claims, **characterized in that** at least one lug (40) and preferably two lugs (40) extending in the axial direction is or are provided at the end face of the head part (14) remote from the rivet section (16) and the guide section (18).

15. Functional element (10) in accordance with claim 14, **characterized in that** the or each lug (40) has a flank which, on attachment of a cable shoe, prevents a rotation of the same about the longitudinal axis (11) of the functional element (10).

16. Functional element (10) in accordance with claim 14 or claim 15, **characterized in that** the jacket surface of the head part (14) has a corresponding recess (42) at the position of the or each lug (40) which serves as a security against rotation on attachment to a sheet metal part (50).

17. Functional element (10) in accordance with any one of the preceding claims 1 to 10, **characterized in that**, for the formation of a bolt element, a shaft part, optionally with a thread, is provided at the end face of the head part remote from the rivet section and the guide section.

18. Component assembly comprising a sheet metal part and a functional element (10) in accordance with any one of the preceding claims, wherein the sheet metal part (50) has a recess (72) having hole (76) at the middle, the head part of the functional element (10) being at least partly received in said recess, with the marginal region of the hole being held clamped between the ring-like contact surface (12) and the turned over rivet section (78) in a shape matched manner.

19. Component assembly in accordance with claim 18, **characterized in that** a shape matched connection is present between the sheet material (50) and the features (30) of the functional element (10) providing security against rotation.

20. Component assembly in accordance with claim 18 or claim 19, wherein the functional element (10) is formed in accordance with claim 16 and the sheet material of the sheet metal part (50) is formed into the or each recess (42) which has arisen for the formation of the or each lug (40).

21. Component assembly in accordance with one of the claims 18 to 20, **characterized in that** the guide section (18) projects in the axial direction significantly further than the turned over rivet section (16), for example by at least 4 mm.

22. Method for the attachment of a functional element (10) in accordance with any one of claims 1 to 17 to a sheet metal part (50), wherein the functional element (10) is provided with a head part (14) having a ring-like contact surface (12) and a tubular rivet section (16) provided at the side of the contact surface of the head part (14) and extending away from the head part (14), wherein a tubular guide section (18) is arranged concentric to the tubular rivet section (16) and radially within the latter, wherein a ring gap (20) is provided between the guide section (18) and the rivet section (16) and wherein the guide section (18) projects beyond the free end of the rivet section (16),
**characterized in that**
the pre-holed sheet metal part is supported on a die (52) having a ring-like recess (64) and a central bore (58) which lies at least substantially coaxial to the recess (64), with the diameter of the central bore (58) being only fractionally larger than the outer diameter of the guide section (18) and the recess (64) having a diameter which corresponds at least substantially to the outer diameter of the head part (14) of the functional element (10) plus twice the sheet metal thickness; **in that** the free end face of the guide section (18) of the functional element is pressed, coaxial to the longitudinal axis of the central bore of the die and to the hole of the pre-holed sheet metal part, onto the sheet metal part and the sheet metal part is drawn by means of the end face of the guide section into a conical formation (72) within the recess or, in the case of a conically pre-holed sheet metal part, is broadened in the region of the hole; **in that** the wall of the conical formation (72) is pressed with the rounded end region (24) of the rivet section (16) away from the central longitudinal axis (11) of the die (52) into a steeper position while the guide section (18) is guided by the central bore (58) of the die (52); and **in that** the rivet section (16) is turned over radially outwardly via a ring surface (66), which is concavely rounded in cross-section, in the base region of the recess of the die outwardly around the ring wall of the conical formation (72) in order to clamp the sheet metal material between the ring-like contact surface (12) and the turned over rivet section (78) of the functional element (10) in a shape-matched manner with simultaneous deformation of the sheet material into a shape matched connection with any features (30) of the functional element providing security against rotation.

23. Method for the attachment of a functional element (10) to a sheet metal part (50), wherein the functional element (10) is provided with a head part (14) having a ring-like contact surface (12) and a tubular rivet section (16) provided at the side of the contact surface of the head part (14) and extending away from the head part (14), wherein a tubular guide section (18) is arranged concentric to the tubular rivet section (16) and radially within the latter, wherein a ring gap (20) is provided between the guide section (18) and the rivet section (16) and wherein the guide section (18) projects beyond the free end of the rivet section (16), for example a functional element in accordance with any one of the claims 1 to 17, **characterized in that** the sheet metal part is supported on a die (52) having a ring-like recess (64) and a central bore (58) which lies at least substantially coaxial to the recess (64), wherein the diameter of the central bore (58) is only fractionally larger than the outer diameter of the guide section (18) and the recess (64) has a diameter which corresponds at least substantially to the outer diameter of the head part (14) of the functional element (10) plus twice the sheet metal thickness; **in that** the end face of the guide section (18) of the functional element is pressed, coaxial to the longitudinal axis of the central bore of the die, onto the sheet metal part and the sheet metal part is drawn by means of the end face of the guide section into a conical formation (72) within the recess; **in that** a slug (74) is cut out of the sheet metal part (50) by the guide section (18), which is formed as a piercing section, and is disposed of via the central bore (58) of the die (52); **in that** the wall of the conical formation (72) is pressed with the rounded end region (24) of the rivet section (16) away from the central longitudinal axis (11) of the die into a steeper position, while the guide section (18) is guided by the central bore (58) of the die (52); and **in that** the rivet section (16) is turned over radially outwardly via a ring surface (66) which is concavely rounded in cross-section in the base region of the recess of the die outwardly around the ring wall of the conical formation (72) in order to clamp the sheet metal material between the ring-like contact surface and the turned over rivet section (78) of the functional element (10) in a shape-matched manner with simultaneous deformation of the sheet material into a shape matching connection with any features (30) of the functional element providing security against rotation.

## Revendications

1. Elément fonctionnel (10) comportant un élément de tête (14) avec une surface d'appui annulaire (12), et un tronçon de rivetage tubulaire (16) prévu sur l'élément de tête (14) du côté de la surface d'appui (12), qui s'étend en s'écartant de l'élément de tête, un tronçon de guidage tubulaire (18) étant disposé de façon concentrique au tronçon de rivetage tubulaire (16) et radialement à l'intérieur de celui-ci, une fente annulaire (20) étant prévue entre le tronçon de guidage (18) et le tronçon de rivetage (16), et le tronçon de guidage dépassant de l'extrémité libre du tronçon de rivetage,
**caractérisé en ce que**,
vue dans un plan de coupe axiale, l'extrémité libre de la paroi du tronçon de rivetage tubulaire (16) est arrondie, aussi bien sur la face radiale extérieure (24) que sur la face radiale intérieure (26), et présente par exemple une forme semi-circulaire ou de type pointe de flèche, et **en ce que** le tronçon de guidage (18) est agencé sous la forme d'un tronçon de découpe, et comporte une arête tranchante annulaire (28) sur son extrémité frontale opposée à la surface d'appui (12).

2. Elément fonctionnel (10) selon la revendication 1,
**caractérisé en ce que**
la dimension radiale de la fente annulaire (20) se situe dans la plage comprise entre 0 mm et environ 3 mm.

3. Elément fonctionnel (10) selon l'une des revendications précédentes,
**caractérisé en ce que**
la fente annulaire (20) se termine à un écartement axial (a) devant la surface d'appui annulaire (12) du côté du tronçon de rivetage de la surface d'appui annulaire (12).

4. Elément fonctionnel (10) selon l'une des revendications précédentes,
**caractérisé en ce que**
des marques de blocage en rotation (30) sont prévues au voisinage de la surface d'appui (12) dans la zone de la surface d'appui annulaire (12) et/ou sur le tronçon de rivetage (16) et/ou sur la surface d'enveloppe de l'élément de tête (14).

5. Elément fonctionnel (10) selon la revendication 4,
**caractérisé en ce que**
les marques de blocage en rotation (30) sont formées par des taquets ou par des renfoncements de type cannelures.

6. Elément fonctionnel (10) selon la revendication 5, dans lequel des taquets de blocage en rotation (30) sont prévus, et ce de façon proéminente, sur la surface d'appui (12) et sur le tronçon de rivetage (16), dans la zone de la transition entre la surface d'appui et le tronçon de rivetage.

7. Elément fonctionnel (10) selon la revendication 6,
**caractérisé en ce que**
les taquets de blocage en rotation (30) s'étendent dans la direction radiale sur la surface d'appui (12), et dans la direction axiale sur le tronçon de rivetage (16).

8. Elément fonctionnel (10) selon l'une des revendications 4 à 7,
**caractérisé en ce que**
les taquets de blocage en rotation présentent une forme générale arrondie ou sont munis de flancs latéraux (32), qui sont situés dans des plans s'étendant dans la direction longitudinale de l'élément.

9. Elément fonctionnel (10) selon l'une des revendications précédentes,
**caractérisé en ce que**
il est agencé sous la forme d'un élément creux.

10. Elément fonctionnel (10) selon l'une des revendications précédentes,
**caractérisé en ce que**
il est agencé sous la forme d'un élément d'écrou.

11. Elément fonctionnel (10) selon la revendication 10,
**caractérisé en ce que**
l'élément d'écrou comporte un cylindre fileté (38) qui est prévu, soit dans l'élément de tête (14), soit dans le tronçon de guidage (18), soit au moins partiellement dans l'élément de tête (14) et dans le tronçon de guidage (18).

12. Elément fonctionnel (10) selon les revendications 3 et 11,
**caractérisé en ce que**
le cylindre fileté (38) se termine dans la direction axiale approximativement à l'emplacement où la fente annulaire (20) se termine devant la surface d'appui annulaire (18).

13. Elément fonctionnel (10) selon l'une des revendications précédentes,
**caractérisé en ce que**
la face extérieure du tronçon de guidage (18) est agencée sous la forme d'une surface de palier cylindrique.

14. Elément fonctionnel (10) selon l'une des revendications précédentes,
**caractérisé en ce que**,
sur la face frontale de l'élément de tête (14) opposée au tronçon de rivetage (16) et au tronçon de guidage (18), il est prévu au moins une patte (40), et de préférence deux, s'étendant dans la direction axiale.

15. Elément fonctionnel (10) selon la revendication 14,
**caractérisé en ce que**
la ou chaque patte (40) comporte un flanc qui, lors de la fixation d'une cosse de câble, empêche une rotation de celle-ci autour de l'axe longitudinal (11) de l'élément fonctionnel (10).

16. Elément fonctionnel (10) selon la revendication 14 ou 15,
**caractérisé en ce que**,
à l'emplacement de la ou de chaque patte (40), la surface d'enveloppe de l'élément de tête (14) comporte un renfoncement correspondant (42) qui sert de blocage en rotation lors de la fixation de l'élément fonctionnel sur une pièce de tôle (50).

17. Elément fonctionnel (10) selon l'une des revendications 1 à 8,
**caractérisé en ce que**,
pour la réalisation d'un élément de boulon, un élément de tige comportant le cas échéant un filetage est prévu sur la face frontale de l'élément de tête opposée au tronçon de rivetage et au tronçon de guidage.

18. Composant assemblé constitué d'une pièce de tôle et d'un élément fonctionnel (10) selon l'une des revendications précédentes, la pièce de tôle (50) comportant un renfoncement (72) muni d'un trou central (76), dans lequel l'élément de tête de l'élément fonctionnel (10) est logé, au moins partiellement, la zone de bord du trou étant enserrée par complémentarité de formes entre la surface d'appui annulaire (12) et le tronçon de rivetage replié (78).

19. Composant assemblé selon la revendication 18,
**caractérisé en ce que**
une coopération par complémentarité de formes est prévue entre le matériau de tôle (50) et les empreintes de blocage en rotation (30) de l'élément fonctionnel (10).

20. Composant assemblé selon la revendication 18 ou 19, l'élément fonctionnel (10) étant agencé selon la revendication 16, et le matériau de tôle de la pièce de tôle (50) étant formé dans le ou dans chaque renfoncement (42) engendré par la formation de la ou de chaque patte (40).

21. Composant assemblé selon l'une des revendications 18 à 20,
**caractérisé en ce que**,
dans la direction axiale, le tronçon de guidage (18) s'étend nettement plus loin que le tronçon de rivetage replié (16), par exemple d'au moins 4 mm.

22. Procédé destiné à la fixation d'un élément fonctionnel (10) selon l'une des revendications 1 à 17 sur une pièce de tôle (50), l'élément fonctionnel (10) étant pourvu d'un élément de tête (14) comportant une surface d'appui annulaire (12), et d'un tronçon de rivetage tubulaire (16) prévu sur l'élément de tête (14) du côté de la surface d'appui, s'étendant en s'écartant de l'élément de tête (14), un tronçon de guidage tubulaire (18) étant disposé de façon concentrique au tronçon de rivetage tubulaire (16) et radialement à l'intérieur de celui-ci, une fente annulaire (20) étant prévue entre le tronçon de guidage (18) et le tronçon de rivetage (16), et le tronçon de guidage (18) dépassant de l'extrémité libre du tronçon de rivetage (16),
**caractérisé en ce que**,
la pièce de tôle préperforée prend appui sur une matrice (52) comportant un renfoncement annulaire (64) et un perçage central (58) qui est situé, au moins sensiblement, coaxialement au renfoncement (64), le diamètre du perçage central (58) n'étant que légèrement supérieur au diamètre extérieur du tronçon de guidage (18), et le diamètre du renfoncement (64) correspondant, au moins sensiblement, au diamètre extérieur de l'élément de tête (14) de l'élément fonctionnel (10) plus le double de l'épaisseur de la tôle, **en ce que** l'extrémité frontale libre du tronçon de guidage (18) de l'élément fonctionnel est pressée sur la pièce de tôle coaxialement à l'axe longitudinal du perçage central de la matrice et au trou de la pièce de tôle préperforée, et la pièce de tôle étant étirée à l'intérieur du renfoncement en une conformation conique (72) au moyen de l'extrémité frontale du tronçon de guidage, ou étant évasée dans la zone du trou dans le cas d'une pièce de tôle conique préperforée, **en ce que** la paroi de la conformation conique (72) est repoussée par la zone d'extrémité (24) arrondie du tronçon de rivetage (16) à partir de l'axe longitudinal médian (11) de la matrice (52) dans une position plus raide, alors que le tronçon de guidage (18) est guidé par le perçage central (58) de la matrice (52), et **en ce que**, par l'intermédiaire d'une surface annulaire (66) à section transversale concave arrondie, le tronçon de rivetage (16) est replié radialement vers l'extérieur dans la zone de fond du renfoncement de la matrice autour de la paroi annulaire de la conformation conique (72), afin d'enserrer le matériau de tôle par complémentarité de formes entre la surface d'appui annulaire (12) et le tronçon de rivetage replié (78) de l'élément fonctionnel (10), en déformant simultanément le matériau de tôle pour réaliser une complémentarité de formes avec d'éventuelles empreintes de blocage en rotation (30) de l'élément fonctionnel.

23. Procédé destiné à la fixation d'un élément fonctionnel (10) sur une pièce de tôle (50), l'élément fonctionnel (10) étant pourvu d'un élément de tête (14) comportant une surface d'appui annulaire (12), et d'un tronçon de rivetage tubulaire (16) prévu sur l'élément de tête (14) du côté de la surface d'appui, qui s'étend en s'écartant de l'élément de tête (14), un tronçon de guidage tubulaire (18) étant disposé de façon concentrique au tronçon de rivetage tubulaire (16) et radialement à l'intérieur de celui-ci, une fente annulaire (20) étant prévue entre le tronçon de guidage (18) et le tronçon de rivetage (16), et le tronçon de guidage (18) dépassant de l'extrémité libre du tronçon de rivetage (16), par exemple d'un élément fonctionnel selon l'une des revendications 1 à 17,
**caractérisé en ce que**,
la pièce de tôle prend appui sur une matrice (52) comportant un renfoncement annulaire (64) et un perçage central (58) qui est situé, au moins sensiblement, coaxialement au renfoncement (64), le diamètre du perçage central (58) n'étant que légèrement supérieur au diamètre extérieur du tronçon de guidage (18), et le diamètre du renfoncement (64) correspondant, au moins sensiblement, au diamètre extérieur de l'élément de tête (14) de l'élément fonctionnel (10) plus le double de l'épaisseur de la tôle, **en ce que** l'extrémité frontale du tronçon de guidage (18) de l'élément fonctionnel est pressée sur la pièce de tôle coaxialement à l'axe longitudinal du perçage central de la matrice, et la pièce de tôle étant étirée à l'intérieur du renfoncement en une conformation conique (72) au moyen de l'extrémité frontale du tronçon de guidage, **en ce que**, avec le tronçon de guidage (18) réalisé sous la forme d'un tronçon de découpe, une pastille (74) est découpée de la pièce de tôle (50) et évacuée par l'intermédiaire du perçage central (58) de la matrice (52), **en ce que** la paroi de la conformation conique (72) est repoussée par la zone d'extrémité (24) arrondie du tronçon de rivetage (16) à partir de l'axe longitudinal médian (11) de la matrice dans une position de pente plus raide, alors que le tronçon de guidage (18) est guidé par le perçage central (58) de la matrice (52), et **en ce que**, par l'intermédiaire d'une surface annulaire (66) à section transversale concave arrondie, le tronçon de rivetage (16) est replié radialement vers l'extérieur dans la zone de fond du renfoncement de la matrice autour de la paroi annulaire de la conformation conique (72), afin d'enserrer le matériau de tôle par complémentarité de formes entre la surface d'appui annulaire et le tronçon de rivetage replié (78) de l'élément fonctionnel (10), en déformant simultanément le matériau de tôle en une liaison par complémentarité de formes avec d'éventuelles marques de blocage en rotation (30) de l'élément fonctionnel.
